# EUROPEAN PATENT APPLICATION

(11) **EP 4 002 177 A1**
(43) Date of publication of application: **25.05.2022**
(21) Application number: 21209016.1
(22) Date of filing: 18.11.2021
(51) Int. Cl.: G06F 21/62

(54) **SERVICE PLATFORM USER PRIVILEGE MANAGEMENT METHOD AND COMPUTER APPARATUS**

(30) Priority: 20.11.2020 CN 202011307436
(71) Applicant: Shenzhen Sekorm Component Network Co., Ltd, Shenzhen, Guangdong (CN)
(72) Inventor: LIN, Heng, Shenzhen (CN)
(74) Representative: Westphal, Mussgnug & Partner, Patentanwälte mbB

(57) **Abstract**

The present invention relates to a service platform user privilege management method and a computer apparatus. The method includes: S10, setting up a user privilege and a trust level for each of user accounts of a service platform; and S20, the user account of which the trust level is greater than the predetermined level being allowed to allot the user privilege owned thereby to other user accounts. The service platform of the present invention assigns a user having a high trust level with a certain privilege allotment power, allowing it to allot the user privileges already owned thereby to other users, and this not only realizes management of user privilege, but also enhances inter-relationship among the users and improves users' experience.

## Description

### FIELD OF THE INVENTION

The present invention relates to the field of management of user privilege in a service platform, and more particularly to a service platform user privilege management method and a computer apparatus.

### DESCRIPTION OF THE RELATED ART

A service platform usually needs to manage a large number of users. Each user has different privilege. For example, an e-commerce platform assigns different operation privileges to different users. Most of the contemporary service platforms rely on human labor for management of the user privilege and a large amount labor is required. There are also platforms that apply scoring to evaluate users' registration and allot privilege according to the level of scoring. In sum, the contemporary service platforms implement privilege allotment by the platform management, with no additional power entrusted to the users and no inter-relationship among users involved.

### SUMMARY OF THE INVENTION

The technical issue that the present invention aims to resolve is to provide, in view of the above-described deficiency of the prior art, a service platform user privilege management method and a computer apparatus.

The technical solution that the present invention adopts to resolve the technical issue is to construct a service platform user privilege management method, which comprises:
S10, setting up a user privilege and a trust level for each of user accounts of a service platform; and
S20, the user account of which the trust level is greater than a predetermined level being allowed to allot the user privilege thereof to other user accounts.

Further, in the service platform user privilege management method according to the present invention, Step S20 comprises:
S201, the user account of which the trust level is greater than the predetermined level being allowed to allot the user privilege owned thereby to user accounts of which the trust levels are identical thereto.

Further, in the service platform user privilege management method according to the present invention, Step S20 comprises:
S202, the user account of which the trust level is greater than the predetermined level being allowed to allot the user privilege owned thereby to the user accounts of which the trust levels are lower as compared thereto.

Further, in the service platform user privilege management method according to the present invention, if the user account owns multiple user privileges, Step S20 comprises:
S203, the user account of which the trust level is greater than the predetermined level allotting one or multiple ones of the user privileges to other user accounts.

Further, in the service platform user privilege management method according to the present invention, Step S10 comprises: S101, setting up a user privilege, a trust level, and a preset privilege allotment account quantity for each of user accounts of a service platform; and
Step S20 comprises:
S204, counting an already-privilege-allotted account number of the user account;
S205, determining whether the already-privilege-allotted account number is greater than the preset privilege allotment account quantity or not; and
S206, if no, the user account of which the trust level is greater than the predetermined level being allowed to allot the user privilege owned thereby to other user accounts.

Further, in the service platform user privilege management method according to the present invention, Step S20 comprises:
S207, the user account of which the trust level is greater than the predetermined level being allowed to allot the user privilege owned thereby to other user accounts, and the user accounts to which the user privilege is allotted being allowed to allot the user privilege owned thereby to other user accounts.

Further, in the service platform user privilege management method according to the present invention, in Step S207, the user accounts to which the user privilege is allotted being allowed to allot the user privilege owned thereby to other user accounts comprises:
the user accounts to which the user privilege is allotted being allowed to allot the user privilege that is allotted thereto to other user accounts.

Further, in the service platform user privilege management method according to the present invention, Step S10 comprises: S102, setting up a user privilege, a trust level, and a preset privilege allotment depth for each of user accounts of a service platform, the preset privilege allotment depth referring to a hierarchy level of privilege allotment power for a user account that is allotted with user privilege; and
in Step S207, the user accounts to which the user privilege is allotted being allowed to allot the user privilege owned thereby to other user accounts comprises:
S2071, counting an already-performed privilege allotment depth of the user account;
S2072, determining whether the already-performed privilege allotment depth is greater than the preset privilege allotment depth or not; and
S2073, if no, the user accounts to which the user privilege is allotted being allowed to allot the user privilege owned thereby to other user accounts.

Further, the service platform user privilege management method according to the present invention further comprises, after Step S20:
S30, the service platform recording historical data of privilege allotment of the user account.

Further, the present invention also provides a computer apparatus, which comprises a storage and a processor;
the storage storing a computer program; and
the processor executing the computer program stored in the storage in order to perform the service platform user privilege management method described above.

Implementation of the service platform user privilege management method and the computer apparatus according to the present invention provide the following beneficial effects. The service platform of the present invention assigns a user having a high trust level with a certain privilege allotment power, allowing it to allot the user privileges already owned thereby to other users, and this not only realizes management of user privilege, but also enhances inter-relationship among the users and improves users' experience.

### BRIEF DESCRIPTION OF THE DRAWINGS

A detailed description of the present invention will be provided below with reference to the attached drawings and embodiments, and in the drawings:
FIG. 1 is a flow chart illustrating a service platform user privilege management method provided according to an embodiment;
FIG. 2 is a flow chart illustrating a service platform user privilege management method provided according to an embodiment;
FIG. 3 is a flow chart illustrating a service platform user privilege management method provided according to an embodiment;
FIG. 4 is a flow chart illustrating a service platform user privilege management method provided according to an embodiment;
FIG. 5 is a flow chart illustrating a service platform user privilege management method provided according to an embodiment;
FIG. 6 is a flow chart illustrating a service platform user privilege management method provided according to an embodiment;
FIG. 7 is a flow chart illustrating a service platform user privilege management method provided according to an embodiment; and
FIG. 8 is a schematic view illustrating a structure of a computer apparatus provided according to an embodiment.

### DETAILED DESCRIPTION OF PREFERRED EMBODIMENTS OF THE INVENTION

For better understanding of the technical features, purposes, and efficacy of the present invention, embodiments of the present invention will be described in detail with reference to the drawings.

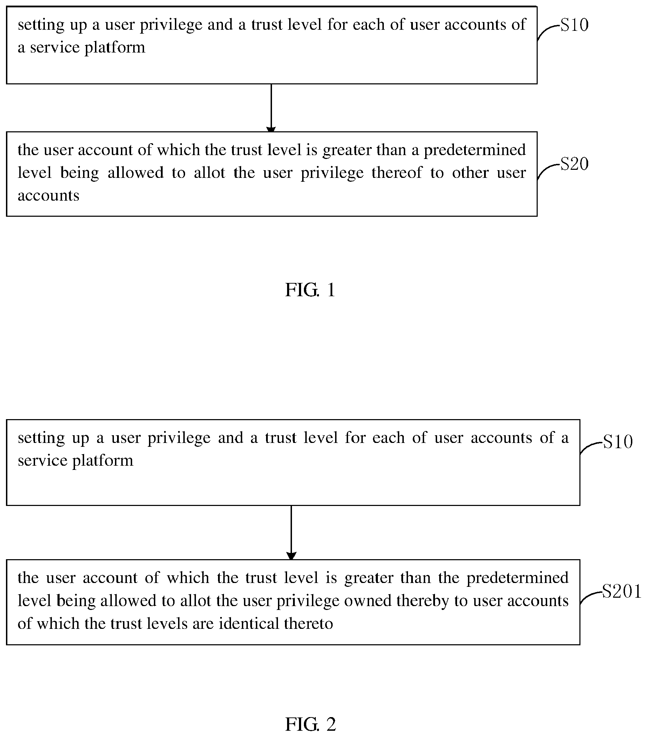

In a preferred embodiment, referring to FIG. 1, the service platform user privilege management method comprises the following steps:
S10, setting up a user privilege and a trust level for each of user accounts of a service platform. The service platform includes multiple user accounts, and a management of the service platform sets up the user privilege and trust level for each of the user accounts, wherein the trust level being higher indicates credit of the user account being better, and the trust level includes at least two levels, for example the trust level being classified as trustable and untrustable.
S20, the user account of which the trust level is greater than a predetermined level being allowed to allot the user privilege thereof to other user accounts. The user privileges are usually different for different user accounts, and a user account of which the trust level is greater than the predetermined level possesses a privilege allotment power, namely the user account of which the trust level is greater than the predetermined level is allowed to allot the user privilege owned thereby to other user accounts, wherein the predetermined level refers to a credit standard set up in the service platform, and the privilege allotment power is owned only when the trust grading is higher than the credit standard. After the user account of which the trust level is greater than the predetermined level allots the user privilege owned thereby to other user accounts, the user accounts that are allotted with the privilege own the user privilege due to the privilege allotment, and privilege allotment among the users is realized. It is appreciated that the user account that possesses the privilege allotment power, after exercising a privilege allotment behavior, still enjoys the user privilege and does not lose the user privilege due to the privilege allotment.

Optionally, in case that the user account owns multiple user privileges, Step S20 comprises: S203, the user account of which the trust level is greater than the predetermined level allotting one or multiple ones of the user privileges to other user accounts.

In the instant embodiment, the service platform assigns a user having a high trust level with a certain privilege allotment power, allowing it to allot the user privileges already owned thereby to other users, and this not only realizes management of user privilege, but also enhances inter-relationship among the users and improves users' experience.

In a preferred embodiment, referring to FIG. 2, the service platform user privilege management method comprises the following steps:
S10, setting up a user privilege and a trust level for each of user accounts of a service platform. The service platform includes multiple user accounts, and a management of the service platform sets up the user privilege and trust level for each of the user accounts, wherein the trust level being higher indicates credit of the user account being better, and the trust level includes at least two levels, for example the trust level being classified as trustable and untrustable.
S201, the user account of which the trust level is greater than the predetermined level being allowed to allot the user privilege owned thereby to user accounts of which the trust levels are identical thereto. Different user accounts having identical trust levels own different user privileges, and the user account of which the trust level is greater than the predetermined level possesses the privilege allotment power, namely the user account of which the trust level is greater than the predetermined level is allowed to allot the user privilege owned thereby to the user accounts of which the trust levels are identical thereto, wherein the predetermined level refers to a credit standard set up in the service platform, and the privilege allotment power is owned only when the trust grading is higher than the credit standard. After the user account of which the trust level is greater than the predetermined level allots the user privilege owned thereby to the user accounts of which the trust levels are identical thereto, the user accounts that are allotted with the privilege own the user privilege due to the privilege allotment, and privilege allotment among the users is realized. It is appreciated that the user account that possesses the privilege allotment power, after exercising a privilege allotment behavior, still enjoys the user privilege and does not lose the user privilege due to the privilege allotment.

The instant embodiment allows the user account that possesses the privilege allotment power to allot privilege to the user accounts of which the trust levels are identical thereto, and this enhances inter-relationship among the users, and also realizes management of privilege in the platform.

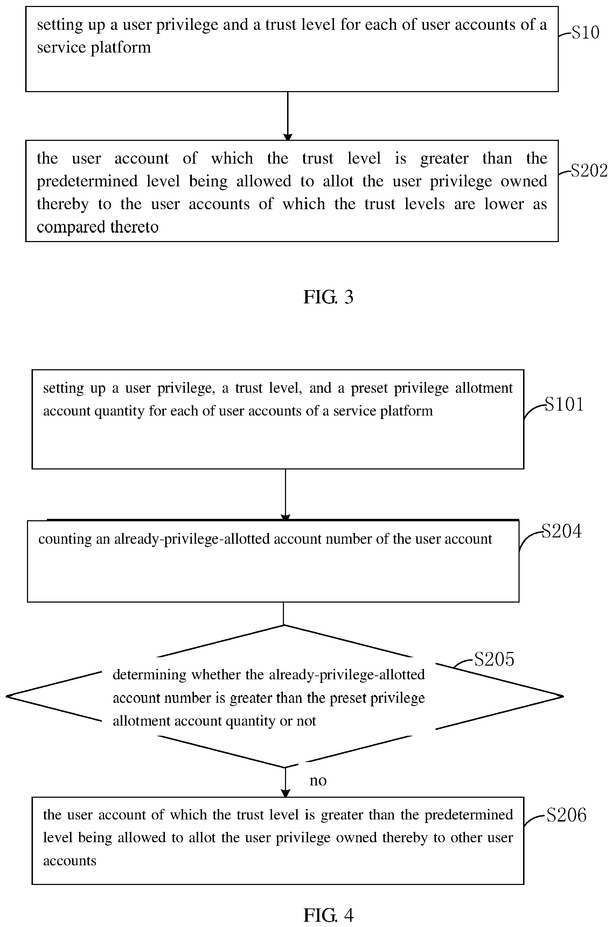

In a preferred embodiment, referring to FIG. 3, the service platform user privilege management method comprises the following steps:
S10, setting up a user privilege and a trust level for each of user accounts of a service platform. The service platform includes multiple user accounts, and a management of the service platform sets up the user privilege and trust level for each of the user accounts, wherein the trust level being higher indicates credit of the user account being better, and the trust level includes at least two levels, for example the trust level being classified as trustable and untrustable. A user account that owns a higher trust level owns more user privilege than a user account that owns a lower trust level.
S202, the user account of which the trust level is greater than the predetermined level being allowed to allot the user privilege owned thereby to the user accounts of which the trust levels are lower as compared thereto. The user account that owns a higher trust level owns more user privilege than the user accounts that owns lower trust levels, and the user account of which the trust level is greater than the predetermined level possesses a privilege allotment power, namely the user account of which the trust level is greater than the predetermined level is allowed to allot the user privilege owned thereby to the user accounts of which the trust levels are lower as compared thereto, wherein the predetermined level refers to a credit standard set up in the service platform, and the privilege allotment power is owned only when the trust grading is higher than the credit standard. After the user account of which the trust level is greater than the predetermined level allots the user privilege owned thereby to the user accounts of which the trust levels are lower as compared thereto, the user accounts that are allotted with the privilege own the user privilege due to the privilege allotment, and privilege allotment among the users is realized. It is appreciated that the user account that possesses the privilege allotment power, after exercising a privilege allotment behavior, still enjoys the user privilege and does not lose the user privilege due to the privilege allotment.

The instant embodiment allows the user account of a higher trust level that possesses the privilege allotment power to allot privilege to the user accounts of lower trust levels, and this enhances inter-relationship among the users, and also realizes management of privilege in the platform.

In a preferred embodiment, referring to FIG. 4, the service platform user privilege management method comprises the following steps:
S101, setting up a user privilege, a trust level, and a preset privilege allotment account quantity for each of user accounts of a service platform. The service platform includes multiple user accounts, and a management of the service platform sets up the user privilege, the trust level, and the preset privilege allotment account quantity for each of the user accounts, wherein the trust level being higher indicates credit of the user account being better, and the trust level includes at least two levels, for example the trust level being classified as trustable and untrustable. The preset privilege allotment account quantity refers to a total number of user accounts to which the user account that possesses the privilege allotment power may allot privilege.
S204, counting an already-privilege-allotted account number of the user account. The user account of which the trust level is greater than the predetermined level is allowed to allot the user privilege owned thereby to other user accounts, and the already-privilege-allotted account number refers to a total number of user accounts to which the user account that possesses the privilege allotment power already allots the privilege.
S205, determining whether the already-privilege-allotted account number is greater than the preset privilege allotment account quantity or not.
S206, if the already-privilege-allotted account number is less than or equal to the preset privilege allotment account quantity, the user account of which the trust level is greater than the predetermined level being allowed to allot the user privilege owned thereby to other user accounts; and if the already-privilege-allotted account number is greater than the preset privilege allotment account quantity, the user account that possesses the privilege allotment power losing the privilege allotment power.

In the instant embodiment, the service platform assigns a user having a high trust level with a certain privilege allotment power, allowing it to allot the user privileges already owned thereby to other users, while at the same time displaying the quantity of privilege allotment to prevent misuse of power.

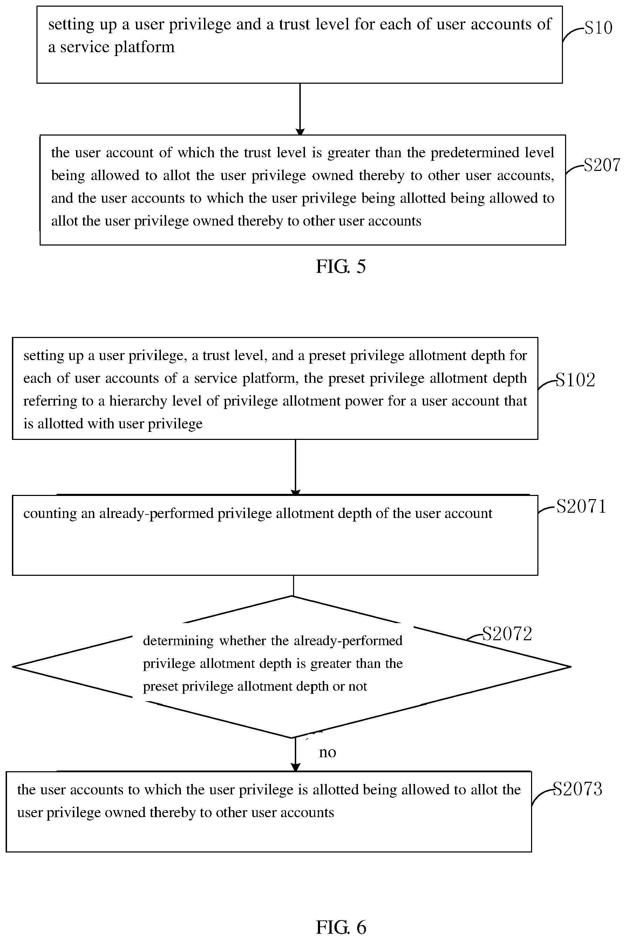

In a preferred embodiment, referring to FIG. 5, the service platform user privilege management method comprises the following steps:
S10, setting up a user privilege and a trust level for each of user accounts of a service platform. The service platform includes multiple user accounts, and a management of the service platform sets up the user privilege and trust level for each of the user accounts, wherein the trust level being higher indicates credit of the user account being better, and the trust level includes at least two levels, for example the trust level being classified as trustable and untrustable.
S207, the user account of which the trust level is greater than the predetermined level being allowed to allot the user privilege owned thereby to other user accounts, and the user accounts to which the user privilege is allotted being allowed to allot the user privilege owned thereby to other user accounts. The user privileges are usually different for different user accounts, and a user account of which the trust level is greater than the predetermined level possesses a privilege allotment power, namely the user account of which the trust level is greater than the predetermined level is allowed to allot the user privilege owned thereby to other user accounts, wherein the predetermined level refers to a credit standard set up in the service platform, and the privilege allotment power is owned only when the trust grading is higher than the credit standard. After the user account of which the trust level is greater than the predetermined level allots the user privilege owned thereby to other user accounts, the user accounts that are allotted with the privilege own the user privilege due to the privilege allotment.

Further, the user accounts to which the privilege is allotted owns the privilege allotment power due to receiving the privilege allotment, and is allowed to allot the user privilege owned thereby to other user accounts. For example, user A allots privilege to user B, and user B receives the privilege of privilege allotment, so that user B is allowed to allot the privilege to user C. It is appreciated that the user account that possesses the privilege allotment power, after exercising a privilege allotment behavior, still enjoys the user privilege and does not lose the user privilege due to the privilege allotment.

Optionally, in Step S207, the user accounts to which the user privilege is allotted being allowed to allot the user privilege owned thereby to other user accounts comprises: the user accounts to which the user privilege is allotted being allowed to allot the user privilege that is allotted thereto to other user accounts, namely the user accounts are only allowed to allot the user privilege allotted thereto to other user accounts, and are not allowed to allot user privileges that are already owned thereby before the privilege allotment to other user accounts.

In the instant embodiment, the users that receive privilege allotment acquire the privilege allotment power, and are allowed to allot the user privilege owned thereby to other user accounts, so as to further expand relationship among users and enrich fashions of platform management.

In a preferred embodiment, referring to FIG. 6, the service platform user privilege management method comprises the following steps:
S102, setting up a user privilege, a trust level, and a preset privilege allotment depth for each of user accounts of a service platform, the preset privilege allotment depth referring to a hierarchy level of privilege allotment power for a user account that is allotted with user privilege, namely a privilege allotment user account making privilege allotment to a user account that receives the privilege allotment once referring to one hierarchy level, meaning the privilege allotment depth is 1; the user account that receives the privilege allotment making privilege allotment to other user accounts once being another hierarchy level, the privilege allotment depth this time being 2; and so forth, each time a user account that receives privilege allotment performs privilege allotment once, the privilege allotment depth being increased by 1. For example, user A performs privilege allotment on user B, and the privilege allotment depth is 1; user B performs privilege allotment again on use C, and the privilege allotment depth is 2; user C performs privilege allotment on user D, and the privilege allotment depth is 3; and user D performs privilege allotment on user E, and the privilege allotment depth is 4. The privilege allotment depth is counted in this way.
S2071, counting an already-performed privilege allotment depth of the user account. The user account of which the trust level is greater than the predetermined level is allowed to allot the user privilege owned thereby to other user accounts, and for each hierarchy level of performing privilege allotment, the already-performed privilege allotment depth is increased by 1.
S2072, determining whether the already-performed privilege allotment depth is greater than the preset privilege allotment depth or not.
S2073, if the already-performed privilege allotment depth is less than or equal to the preset privilege allotment depth, the user accounts to which the user privilege is allotted being allowed to allot the user privilege owned thereby to other user accounts; and if the already-performed privilege allotment depth is greater than the preset privilege allotment depth, a last user account that receives the privilege allotment is not entitled the privilege allotment power.

In the instant embodiment, the privilege-allotted user acquires a privilege allotment power, and is allowed to allot the user privilege owned thereby to other user accounts, and display being in respect of the privilege allotment depth to help constrain the privilege allotment power of the users.

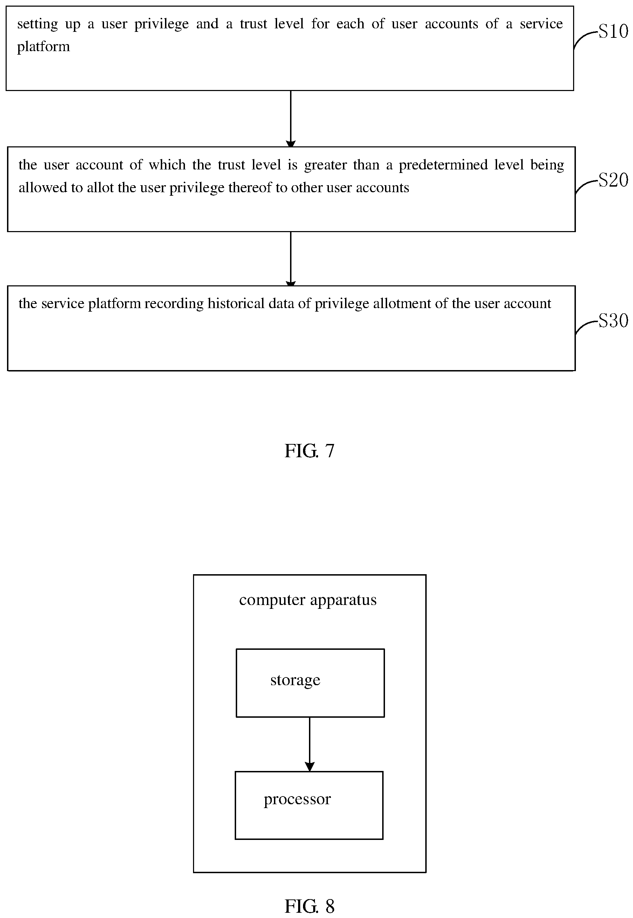

In a preferred embodiment, referring to FIG. 7, the service platform user privilege management method comprises the following steps:
S10, setting up a user privilege and a trust level for each of user accounts of a service platform. The service platform includes multiple user accounts, and a management of the service platform sets up the user privilege and trust level for each of the user accounts, wherein the trust level being higher indicates credit of the user account being better, and the trust level includes at least two levels, for example the trust level being classified as trustable and untrustable.
S20, the user account of which the trust level is greater than a predetermined level being allowed to allot the user privilege thereof to other user accounts. The user privileges are usually different for different user accounts, and a user account of which the trust level is greater than the predetermined level possesses a privilege allotment power, namely the user account of which the trust level is greater than the predetermined level is allowed to allot the user privilege owned thereby to other user accounts, wherein the predetermined level refers to a credit standard set up in the service platform, and the privilege allotment power is owned only when the trust grading is higher than the credit standard. After the user account of which the trust level is greater than the predetermined level allots the user privilege owned thereby to other user accounts, the user accounts that are allotted with the privilege own the user privilege due to the privilege allotment, and privilege allotment among the users is realized. It is appreciated that the user account that possesses the privilege allotment power, after exercising a privilege allotment behavior, still enjoys the user privilege and does not lose the user privilege due to the privilege allotment.
S30, the service platform recording historical data of privilege allotment of the user account. The historical data of privilege allotment comprises, but not limited to, privilege allotment time, privilege allotment contents, privilege allotment user account, and user account that receives privilege allotment. The management of the service platform may check out the historical data of privilege allotment.

In the instant embodiment, the service platform makes records of privilege allotment recording of the user account to ease subsequent operations of management.

A preferred embodiment provides a computer apparatus, referring to FIG. 8, and the computer apparatus comprises a storage and a processor, the storage storing a computer program; the processor executing the computer program stored in the storage in order to perform the service platform user privilege management method provided in the above embodiments. Optionally, the computer apparatus is a server or a cloud.

In the instant embodiment, the service platform assigns a user having a high trust level with a certain privilege allotment power, allowing it to allot the user privileges already owned thereby to other users, and this not only realizes management of user privilege, but also enhances inter-relationship among the users and improves users' experience.

A progressive way is adopted to illustrate various embodiments of the disclosure. The description of each embodiment focuses on key features that are different from those of other embodiments. Similar parts of the various embodiments may refer to each other. For the devices disclosed in the embodiments, since they are corresponding to the methods disclosed in the embodiments, and the descriptions thereof are relatively simplified, and the related parts may refer to the descriptions of the methods.

Skilled artisans may further notice that the units and method steps of each example of the embodiments disclosed in this disclosure can be implemented in hardware or computer software or a combination of the two. To clearly illustrate the exchangeability of hardware and software, the illustration provided above demonstrates the components and steps of each example with a general description according to functions thereof. Whether such functions can be implemented with hardware or software is determined by the specific application and design requirement conditions of the technical solution. Skilled artisans may adopt different ways to implement the functions so described for each specific application, and such implementations should not be regarded as exceeding the scope of the present invention.

The steps of the method or algorithm described with reference to the embodiments disclosed in the disclosure can be implemented directly by means of hardware, or by means of software modules executable in a processor, or a combination of the two. The software modules may be loaded in a random access memory (RAM), an internal storage, a read only memory (ROM), an electrically programmable ROM, an electrically erasable ROM, a register, a hard disc drive, a mobile magnetic drive, a CD-ROM, or any other forms of storage medium known in the field.

The embodiments provided above are only for illustration of the technical thoughts and features of the present invention, for the purposes to help those skilled in the art to understand the contents of the present invention and to accordingly put into practice, and should not be construed as limiting to the scope of protection for the present invention. All variations and modifications that are considered equivalent to the scope of the appended claims of the application belong to the scope of the present invention as defined solely by the appended claims.

## Claims

1. A service platform user privilege management method, **characterized by** comprising:
S10, setting up a user privilege and a trust level for each of user accounts of a service platform; and
S20, the user account of which the trust level is greater than a predetermined level being allowed to allot the user privilege thereof to other user accounts.

2. The service platform user privilege management method according to claim 1, **characterized in that** Step S20 comprises:
S201, the user account of which the trust level is greater than the predetermined level being allowed to allot the user privilege owned thereby to user accounts of which the trust levels are identical thereto.

3. The service platform user privilege management method according to claim 1, **characterized in that** Step S20 comprises:
S202, the user account of which the trust level is greater than the predetermined level being allowed to allot the user privilege owned thereby to the user accounts of which the trust levels are lower as compared thereto.

4. The service platform user privilege management method according to claim 1, **characterized in that** if the user account owns multiple user privileges, Step S20 comprises:
S203, the user account of which the trust level is greater than the predetermined level allotting one or multiple ones of the user privileges to other user accounts.

5. The service platform user privilege management method according to claim 1, **characterized in that** Step S10 comprises: S101, setting up a user privilege, a trust level, and a preset privilege allotment account quantity for each of user accounts of a service platform; and
Step S20 comprises:
S204, counting an already-privilege-allotted account number of the user account;
S205, determining whether the already-privilege-allotted account number is greater than the preset privilege allotment account quantity or not; and
S206, if no, the user account of which the trust level is greater than the predetermined level being allowed to allot the user privilege owned thereby to other user accounts.

6. The service platform user privilege management method according to claim 1, **characterized in that** Step S20 comprises:
S207, the user account of which the trust level is greater than the predetermined level being allowed to allot the user privilege owned thereby to other user accounts, and the user accounts to which the user privilege being allotted being allowed to allot the user privilege owned thereby to other user accounts.

7. The service platform user privilege management method according to claim 6, **characterized in that** in Step S207, the user accounts to which the user privilege is allotted being allowed to allot the user privilege owned thereby to other user accounts comprises:
the user accounts to which the user privilege is allotted being allowed to allot the user privilege that is allotted thereto to other user accounts.

8. The service platform user privilege management method according to claim 6, **characterized in that** Step S10 comprises: S102, setting up a user privilege, a trust level, and a preset privilege allotment depth for each of user accounts of a service platform, the preset privilege allotment depth referring to a hierarchy level of privilege allotment power for a user account that is allotted with user privilege; and
in Step S207, the user accounts to which the user privilege is allotted being allowed to allot the user privilege owned thereby to other user accounts comprises:
S2071, counting an already-performed privilege allotment depth of the user account;
S2072, determining whether the already-performed privilege allotment depth is greater than the preset privilege allotment depth or not; and
S2073, if no, the user accounts to which the user privilege is allotted being allowed to allot the user privilege owned thereby to other user accounts.

9. The service platform user privilege management method according to any one of claims 1-8, **characterized by** further comprising, after Step S20:
S30, the service platform recording historical data of privilege allotment of the user account.

10. A computer apparatus, **characterized by** comprising a storage and a processor;
the storage being configured for storing a computer program; and
the processor being configured for executing the computer program stored in the storage in order to perform the service platform user privilege management method according to any one of claims 1-9.
